(19) **Europäisches Patentamt / European Patent Office / Office européen des brevets**

(11) **EP 4 782 839 A1**

(12) **EUROPEAN PATENT APPLICATION**
published in accordance with Art. 153(4) EPC

(43) Date of publication:
**29.07.2026 Bulletin 2026/31**

(21) Application number: **24868070.4**

(22) Date of filing: **29.08.2024**

(51) International Patent Classification (IPC):
**G01N 35/00** (2006.01)

(52) Cooperative Patent Classification (CPC):
**G01N 35/00**

(86) International application number:
**PCT/JP2024/030939**

(87) International publication number:
**WO 2025/062990 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151082**

(71) Applicant: **HITACHI HIGH-TECH CORPORATION Tokyo 105-6409 (JP)**

(72) Inventors:
- **CHUMAN Takeru** **Tokyo 105-6409 (JP)**
- **KETA Yasuhiro** **Tokyo 105-6409 (JP)**
- **TAKADA Eiichiro** **Tokyo 105-6409 (JP)**

(74) Representative: **Strehl & Partner mbB Maximilianstrasse 54 80538 München (DE)**

(54) **AUTOMATIC ANALYSIS DEVICE**

(57) [Problem]
To provide an automatic analyzer that can accurately calculate the flow rate of a liquid flowing in a pipe.

[Solution]
An automatic analyzer that analyzes a sample includes: a pipe in which a liquid flows; a temperature sensor that is located away from the pipe and measures the temperature of a space in which the pipe is installed; and a flow rate calculating section that calculates the flow rate of the liquid flowing in the pipe according to a reference flow rate as a flow rate previously measured at a reference temperature and a measured temperature output from the temperature sensor.

FIG. 3

START

S301 RECEIVE REQUEST FOR ANALYSIS

S302 MEASURE TEMPERATURE OF SPACE

S303 READ REFERENCE TEMPERATURE

S304 CALCULATE FLOW RATE AT ANALYSIS FROM DIFFERENCE BETWEEN MEASURED TEMPERATURE AND REFERENCE TEMPERATURE

S305 ESTIMATE AMOUNT USED OF CLEANING WATER FROM FLOW RATE AT ANALYSIS

S306 IS REMAINING AMOUNT IN TANK LESS THAN ESTIMATED AMOUNT USED? — YES

NO

S307 WARNING OF REMAINING AMOUNT INSUFFICIENCY

S308 ANALYSIS AND CLEANING

S309 UPDATE REMAINING AMOUNT OF CLEANING WATER

END

Processed by Luminess, 75001 PARIS (FR)

EP 4 782 839 A1

## Description

Technical Field

The present invention relates to an automatic analyzer.

Background Art

In an automatic analyzer for analyzing a sample such as blood, urine or the like provided by a patient, various liquids, such as a sample, a reagent, a reaction liquid resulting from a reaction of a sample and a reagent, cleaning water and the like, flow in a pipe. The flow rate of the liquid flowing in the pipe varies with changes in pipe temperature and/or room temperature. It is preferred to reduce the variation in the flow rate of the liquid due to the detrimental effects on the precision of analysis of the automatic analyzer.

Patent Literature 1 discloses an automatic analyzer that measures the temperature of the pipe surface and the temperature of a liquid in a pipe and controls the operation of a syringe pump for pushing/pulling the liquid in the pipe based on the two measured values of the temperature in order to reduce the variation in the flow rate.

Citation List

Patent Literature

Patent Literature 1: Japanese Unexamined Patent Application Publication No. 2019-39731

Summary of Invention

Technical Problem

In Patent Literature 1, however, the temperature of the pipe is merely locally measured. A motor and/or a pump included in the automatic analyzer acts as a heat source, and the pipe temperature varies depending on a distance from the heat source to the pipe and/or the operating state of the heat source. Therefore, an accurate flow rate may not be calculated from the measured value of the local pipe temperature.

Accordingly, it is an object of the present invention to provide an automatic analyzer that can accurately calculate the flow rate of a liquid flowing in a pipe. Solution to Problem

To achieve the above-mentioned object, the present invention provides an automatic analyzer that analyzes a sample, the automatic analyzer including: a pipe in which a liquid flows; a temperature sensor that is located away from the pipe and measures a temperature of a space in which the pipe is installed; and a flow rate calculating section that calculates a flow rate of the liquid flowing in the pipe according to a reference flow rate as a flow rate previously measured at a reference temperature and a measured temperature output from the temperature sensor. Advantageous Effects of Invention

According to the present invention, it is possible to provide an automatic analyzer that can accurately calculate a flow rate of a liquid flowing in a pipe.

Brief Description of Drawings

[Fig. 1] Fig. 1 is a diagram that shows an example of the general configuration of an automatic analyzer.
[Fig. 2] Fig. 2 is a diagram that explains an example of the cleaning water supplying section according to the first embodiment.
[Fig. 3] Fig. 3 is a chart that shows an example of the processing flow according to the first embodiment.
[Fig. 4] Fig. 4 is a diagram that explains another example of the cleaning water supplying section according to the first embodiment.
[Fig. 5] Fig. 5 is a diagram that explains an example of the cleaning water supplying section according to the second embodiment.
[Fig. 6] Fig. 6 is a chart that shows an example of the processing flow according to the second embodiment. Description of Embodiments

Preferred embodiments of an automatic analyzer according to the present invention will be described below with reference to the accompanying drawings. It should be noted that, in a following description and accompanying drawings, same reference signs are used for components having same functional configurations and thus a repeated description is omitted.

First Embodiment

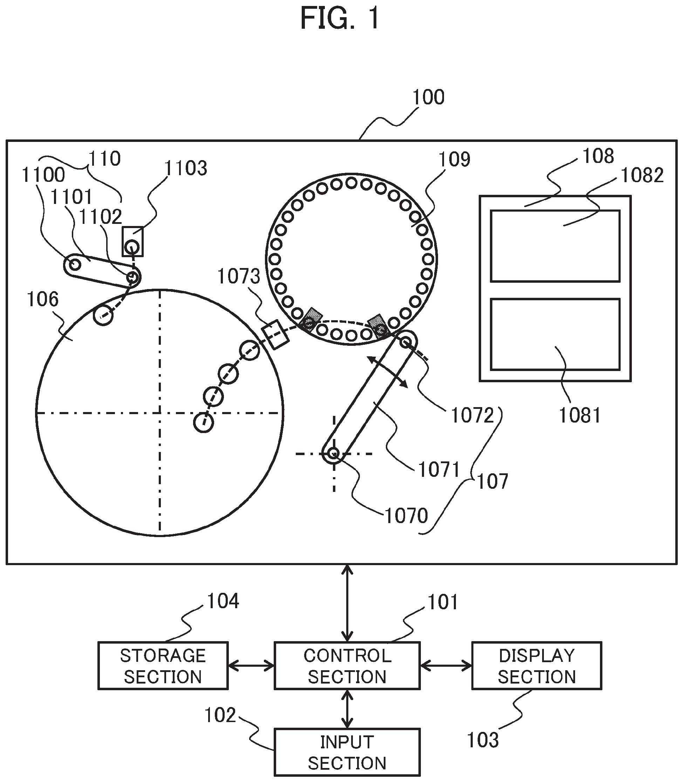

An example of the general configuration of an automatic analyzer 100 is described with reference to Fig. 1. The automatic analyzer 100 is apparatus for analyzing a sample such as blood, urine or the like provided by a patient, which includes a rack 106, a dispensing section 107, a stirring section 110, an incubator 109, and an analyzing section 108, the automatic analyzer 100 being connected to a control section 101. An input section 102, a display section 103 and a storage section 104 are connected to the control section 101. Each of the sections will be described below.

The rack 106 stores a sample container containing a sample and a reagent bottle containing a reagent. The inside of the rack 106 is maintained at a predetermined temperature in order to prevent deterioration of the sample and the reagent.

The dispensing section 107 has a nozzle 1072, an arm 1071 and a rotation axis 1070 in order to dispense the sample or the reagent from the rack 106 to the incubator 109. The nozzle 1072 is a narrow tube for aspirating and discharging the sample or the reagent, which is installed at one end of the arm 1071. The rotation axis 1070 is installed at the other end of the arm 1071, so that the rotation of the rotation axis 1070 causes the nozzle 1072 installed at the one end of the arm 1071 to move on an arc route. Also, the axial extension and contraction of the rotation axis 1070 causes the nozzle 1072 to move in and out of the sample container or the reagent bottle. It is noted that after the sample or the reagent is dispensed, the nozzle 1072 is cleaned at a cleaning bath 1073. The cleaning bath 1073 is located on the arc route of the nozzle 1072.

The stirring section 110 has a stirring stick 1102, an arm 1101 and a rotation axis 1100 in order to stir a reagent in the reagent bottle. The stirring stick 1102 is a stick having a paddle at its leading end to be used to stir the reagent, which is installed at one end of the arm 1101. The rotation axis 1100 is installed at the other end of the arm 1101, so that the rotation of the rotation axis 1100 causes the stirring stick 1102 installed at the one end of the arm 1101 to move on an arc route. Also, the axial extension and contraction of the rotation axis 1100 causes the stirring stick 1102 to move in and out of the reagent bottle. It is noted that after the reagent is stirred, the stirring stick 1102 is cleaned at a cleaning bath 1103. The cleaning bath 1103 is located on the arc route of the stirring stick 1102.

The incubator 109 holds a reaction container containing the sample and the reagent dispensed by the dispensing section 107, and maintains a predetermined temperature in order to speed up the reaction between the sample and the reagent in the reaction container. The reaction container containing a reaction liquid produced by the reaction between the sample and the reagent is delivered to the analyzing section 108.

The analyzing section 108 has a cleaning section 1081 and an analysis cell 1082 in order to analyze the reaction liquid contained in the reaction container. The cleaning section 1081 feeds, to the analysis cell 1082, the reaction liquid contained in the reaction container delivered from the incubator 109, and also cleans the inside of the analyzing section 108. The analysis cell 1082 analyzes the fed reaction liquid. The analysis result obtained in the analyzing section 108 is transmitted to the control section 101.

The control section 101 is a computer to control the operation of each section of the automatic analyzer 100, which causes the automatic analyzer 100 to analyze a sample based on a command input by a human operator through the input section 102 such as a keyboard, a mouse and/or the like. The control section 101 also causes the display section 103 such as a liquid crystal display or the like to display the analysis result transmitted from the analyzing section 108, and causes the storage section 104 such as HDD (Hard Disk Drive), SSD (Solid State Drive) and/or the like to store the analysis result. Further, the control section 101 controls the amount of cleaning water to be supplied to the cleaning bath 1073 for cleaning the nozzle 1072, the cleaning bath 1103 for cleaning the stirring stick 1102 and the cleaning section 1081 for cleaning the inside of the analyzing section 108.

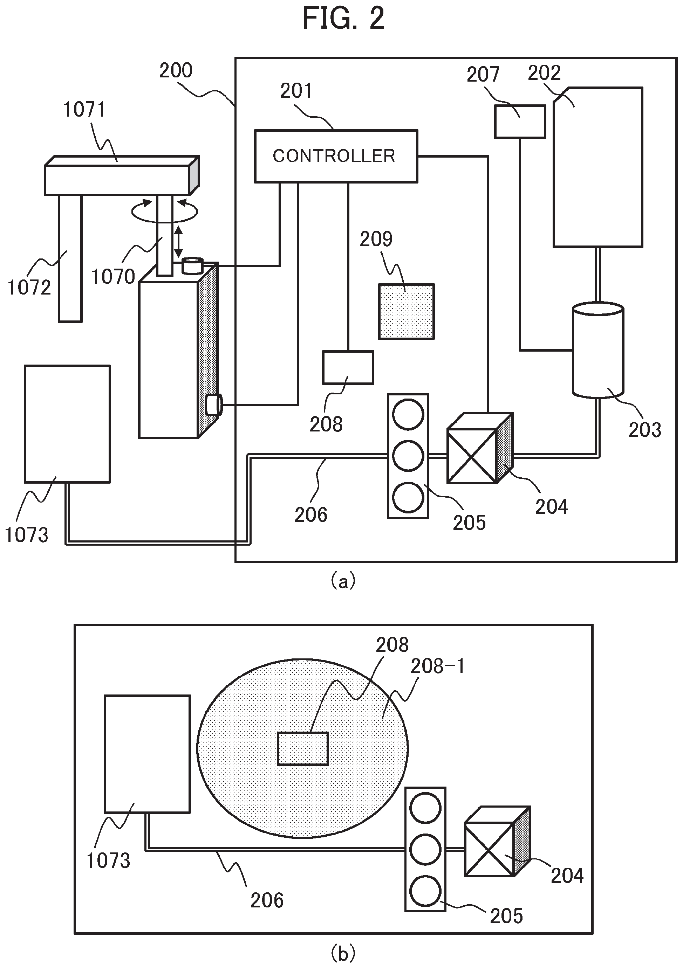

A supplying section 200, which supplies cleaning water to the cleaning bath 1073, is described with reference to (a) of Fig. 2. The supplying section 200 has a controller 201, a tank 202, a pump 203, an electromagnetic valve 204, a water amount adjusting section 205, a pipe 206, a power source 207, a temperature sensor 208 and an outside air hole 209. Each of them is described. It is noted that cleaning water is also supplied to the cleaning bath 1103 and the cleaning section 1081 by a similar configuration to that of the supplying section 200.

The controller 201 is a computing unit such as MPU (Micro-Processing Unit) or the like to control the operation of the electromagnetic valve 204 in accordance with an instruction from the control section 101. The controller 201 also may control a motor used for the extension-contraction and the rotation of the rotation axis 1070 of the dispensing section 107. It is noted that the motor driving the rotation axis 1070 acts as a heat source.

The tank 202 is a container for storing cleaning water used in the cleaning bath 1073, which is connected to the cleaning bath 1073 via the pipe 206.

The pump 203 is installed on the route of the pipe 206 providing connection between the tank 202 and the cleaning bath 1073 to feed the cleaning water from the tank 202 toward the cleaning bath 1073. The pump 203 is, for example, a DC (Direct Current) pump, which is driven by electric power supplied from the power source 207 and acts as a heat source.

The outside air hole 209 is a hole through which an outside air is taken in in order to cool the inside of the automatic analyzer 100 heated by the heat source such as the motor, the pump and/or the like. The outside air hole 209 may be attached with a filter for preventing the entry of dust and/or the like.

The electromagnetic valve 204 is installed on the route of the pipe 206 and downstream from the pump 203. The electromagnetic valve 204 is a valve that is opened/closed under the control of the controller 201. When the electromagnetic valve 204 opens, the liquid flows in the pipe 206, while it closes, no liquid flows. Specifically, when the electromagnetic valve 204 opens, the cleaning water is supplied to the cleaning bath 1073 to clean the nozzle 1072.

As with the electromagnetic valve 204, the water amount adjusting section 205 is installed on the route of the pipe 206 and downstream from the pump 203. The water amount adjusting section 205 adjusts the flow rate which is the amount of liquid flowing in the pipe 206 within unit time, which is, for example, a needle valve. The flow rate adjustment of the water amount adjusting section 205 is performed by a serviceman at the time of installation of the automatic analyzer 100 or at the time of maintenance, and is not performed during analysis.

It is noted that if the room temperature and/or pipe temperature in analysis differs from that when the flow rate adjustment is made, the flow rate in analysis varies from that at the adjustment by the water amount adjusting section 205. Thus, in the first embodiment, the flow rate in analysis is calculated according to the output of the temperature sensor 208.

The temperature sensor 208 is located away from the pipe 206 and measures a temperature of a space 208-1 in which the pipe 206 is installed. The space 208-1 is illustrated in (b) of Fig. 2 by way of example. The temperature sensor 208 measures the temperature of the space 208-1 rather than a local temperature of the pipe 206. As a result, because an average temperature of the pipe 206 is acquired, the variation of the flow rate throughout the entire range of the pipe 206 can be grasped. It is noted that the temperature sensor 208 is preferably located between the outside air hole 209 and the heat source, in particular, at a middle point so that the temperature of the space 208-1 is measured in equilibrium.

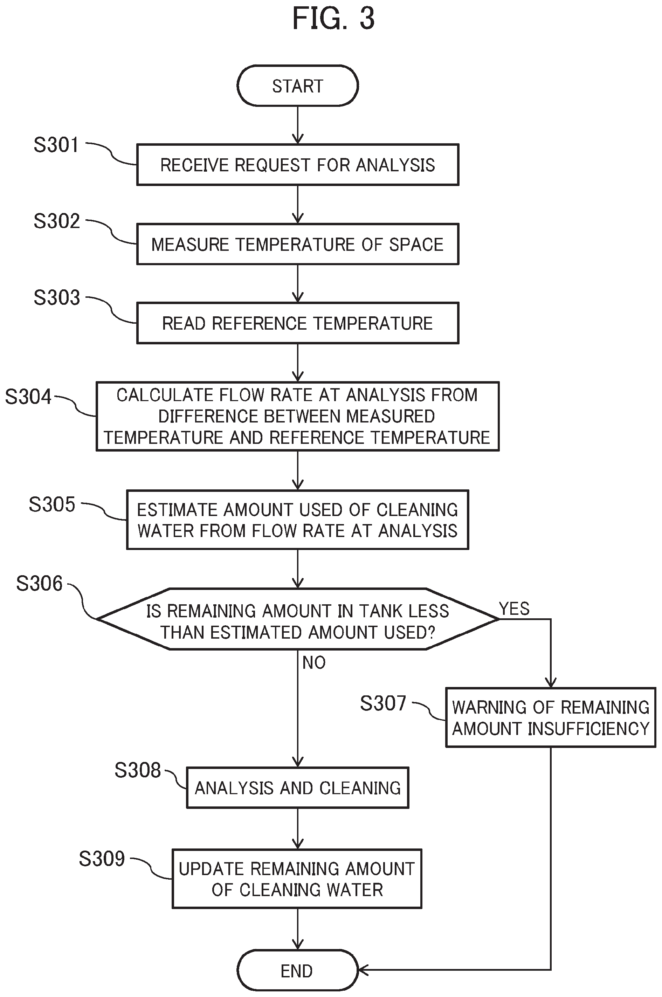

An example of the processing flow according to the first embodiment is described for each step with reference to Fig. 3.

(S301)
The control section 101 receives an analysis request input via the input section by a human operator. In response to the received analysis request, the control section 101 reads an analysis parameter from the storage section 104, and transmits the read analysis parameter to the controller 201.

(S302)
The temperature sensor 208 measures the temperature of the space 208-1. The measured temperature as output of the temperature sensor 208 is transmitted to the controller 201.

(S303)
The controller 201 reads a reference temperature as output of the temperature sensor 208 at the time of flow rate adjustment by the water amount adjusting section 205.

(S304)
The controller 201 calculates a flow rate in analysis according to a difference between the measured temperature transmitted in S302 and the reference temperature read in S303. For the calculation of the flow rate Q in analysis, for example, the following equation is used.

$$Q = Q0 + C \cdot \Delta T \ \ldots \ \text{(Equation 1)}$$

where Q0 denotes a reference flow rate as a flow rate at the reference temperature, C denotes a correction coefficient and $\Delta T$ denotes difference between the measured temperature and the reference temperature. That is, when $\Delta T = 0$, $Q = Q0$ results. It is noted that a correction coefficient C may be calculated according to material and/or an internal diameter of the pipe 206, and/or a viscosity and/or a density of the liquid and it may be calculated according to flow rates previously measured while changing the temperature of the space 208-1.

(S305)
The controller 201 estimates the amount of cleaning water used in analysis according to the flow rate Q in analysis calculated in S304. For estimation of the amount used A of the cleaning water, for example, the following equation is used.

$$A = Q \cdot t \ \ldots \ \text{(Equation 2)}$$

where t denotes a time period for which the electromagnetic valve 204 opens, which is included in the analysis parameter read in S301.

(S306)

The controller 201 determines whether or not the remaining amount of cleaning water in the tank 202 is less than an estimated amount used obtained in S304. If the remaining amount is less than the estimated amount used, the processing goes to S307. If not, the processing goes to S308. It is noted that the remaining amount of cleaning water is read from the storage section 104.

(S307)

The controller 201 transmits, to the control section 101, an insufficiency of the remaining amount of cleaning water in the tank 202, and causes the display section 103 to display a warning of remaining amount insufficiency and also terminates the processing flow. That is, the controller 201 stops the analysis.

(S308)

The controller 201 opens the electromagnetic valve 204 so that the cleaning water is fed from the tank 202 via the pump 203, the electromagnetic valve 204 and the water amount adjusting section 205 into the cleaning bath 1073, thus performing analysis and cleaning in the automatic analyzer 100.

(S309)

The control section 101 uses the amount of cleaning water used in S308 to update the remaining amount of cleaning water in the tank 202 and records the updated remaining amount into the storage section 104. It is noted that, for update of the remaining amount of cleaning water, the estimated amount used calculated in S305 may be used.

Through the processing flow described with reference to Fig. 3, an accurate flow rate is obtained when the temperature in the automatic analyzer 100 changes. It is noted that the controller 201 executing S304 functions as a flow rate calculating section that calculates a flow rate in the pipe 206 according to a measured temperature and a reference flow rate which is a flow rate at a reference temperature. Also, the controller 201 executing S305 functions as an amount-used estimating section that estimates an amount used of the cleaning water according to the flow rate calculated by the flow rate calculating section. Further, the controller 201 executing S306 and S307 functions as a remaining amount determining section that displays a warning of remaining amount sufficiency and stops analysis if a remaining amount in the tank 202 is less than the amount used as estimated by the amount-used estimating section. By the controller 201 functioning as the remaining amount determining section, the automatic analyzer 100 is able to be prevented from abnormally stopping due to cleaning water insufficiency.

It is noted that the processing flow illustrated in Fig. 3 is applied to the cleaning in the cleaning bath 1103 and the cleaning section 1081 without being limited to the cleaning in the cleaning bath 1073. Further, the configuration of the supplying section 200 is not limited to that in Fig. 2.

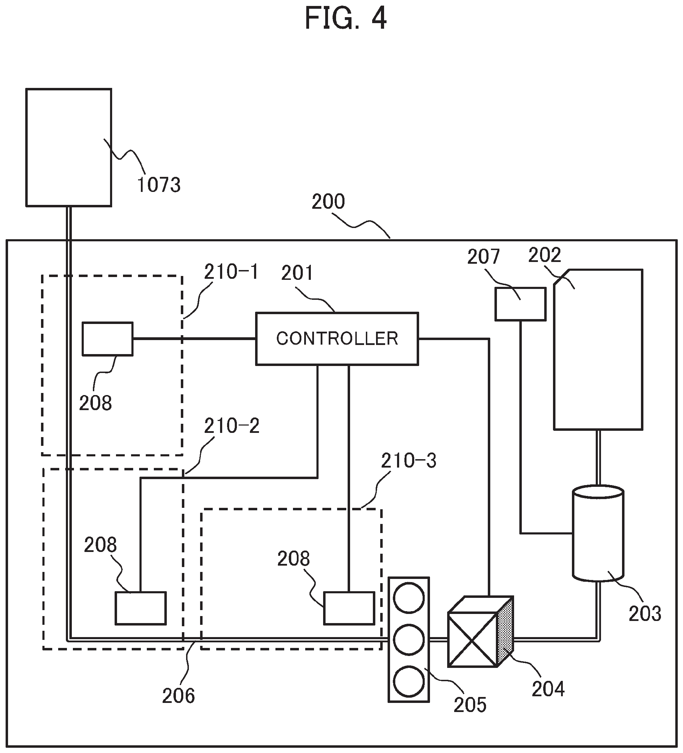

Another example of the supplying section 200 in the first embodiment is described with reference to Fig. 4. As illustrated in Fig. 4, if the inside of the supplying section 200 is divided into a plurality of areas 210-1 to 210-3 by partition walls and/or the like, a temperature sensor 208 is installed in each area. By installing the temperature sensor 208 in each area, even if the inside of the supplying section 200 is divided by the partition wall and/or the like, the flow rate of a flow in the pipe 206 is accurately obtained.

Second Embodiment

The first embodiment has described calculating the flow rate of a flow in the pipe 206 according to the measured temperature output by the temperature sensor 208, and then estimating the amount used of the cleaning water used in analysis according to the calculated flow rate. A second embodiment will describe controlling electric power to be supplied from the power source 207 to the pump 203 according to the flow rate calculated according to the measured temperature.

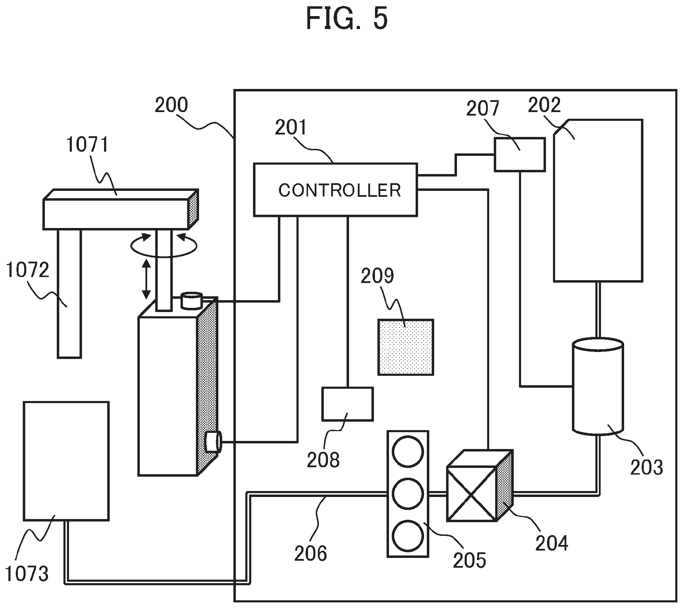

With reference to Fig. 5, the supplying section 200 according to the second embodiment is described. The supplying section 200 in Fig. 5 has a similar configuration to that in the first embodiment. It is noted that the controller 201 controls the operation of the electromagnetic valve 204 and also adjusts the electric power supplied from the power source 207 to the pump 203. The supply power to the pump 203 is adjusted such that the amount of cleaning water used in analysis is maintained constant even when the space temperature of the supplying section 200 changes.

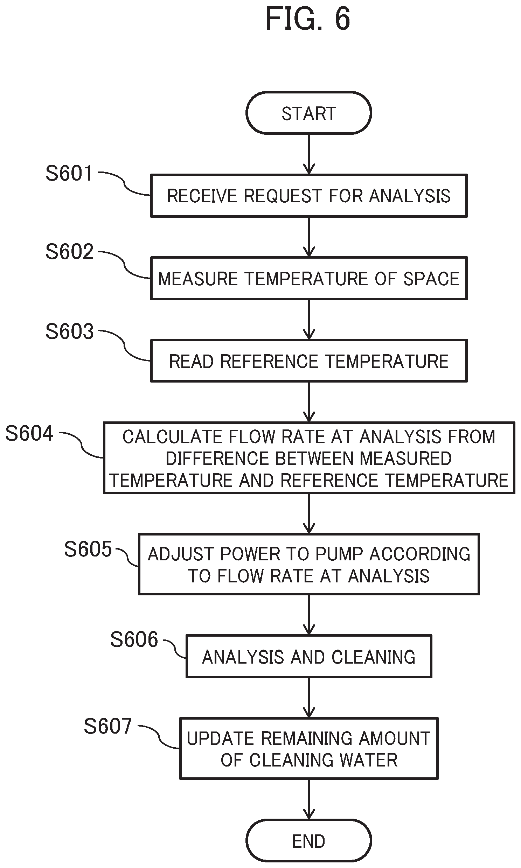

An example of the processing flow according to the second embodiment is described for each step with reference to Fig. 6. It is noted that similar processing to that in the first embodiment is simplistically described.

(S601) to (S604)

The processing is the same as that in S301 to S304.

(S605)

The controller 201 adjusts the electric power supplied from the power source 207 to the pump 203 according to the flow rate Q in analysis calculated in S604. For the adjustment of the supply power, the relationship between a flow rate and supply power, which are previously acquired by measuring a flow rate while changing the supply power, is used. Alternatively, the supply power P may be adjusted in accordance with the following equation.

$$P = P0 \cdot Q0/Q \text{ ... (Equation 3)}$$

Where P0 denotes supply power before adjustment. According to Equation 3, when $\Delta T = 0$ and $Q = Q0$, $P = P0$ results. When $\Delta T \neq 0$ and $Q > Q0$, $P < P0$ results, and when $Q < Q0$, $P > P0$ results.

(S606) to (S607)

The processing is the same as that in S308 to S309.

Through the processing flow described with reference to Fig. 6, an accurate flow rate is obtained when the temperature in the automatic analyzer 100 changes. It is noted that the controller 201 executing S605 functions as a power adjusting section that adjusts electric power supplied from the power source 207 to the pump 203 according to the flow rate calculated by the flow rate calculating section. By the controller 201 functioning as the power adjusting section, the amount of cleaning water used in analysis is maintained constant even when the temperature in analysis changes. By maintaining a constant amount of cleaning water, degradation of the precision of analysis of the automatic analyzer is able to be suppressed.

It is noted that, instead of the adjustment of the supply power, the open time period as a time period for which the electromagnetic valve 204 opens may be adjusted. The open time period t of the electromagnetic valve 204 is adjusted in accordance with, for example, the following equation.

$$T = t0 \cdot Q0/Q \text{ ... (Equation 4)}$$

where t0 denotes the open time period before adjustment, which is included in the analysis parameter read in S601. According to Equation 4, when $\Delta T = 0$ and $Q = Q0$, $t = t0$ results. When $\Delta T \neq 0$ and $Q > Q0$, $t < t0$ results, and when $Q < Q0$, $t > t0$ results. Specifically, the controller 201 functions as an open time period adjusting section that adjusts an open time period as a time period for which the electromagnetic valve 204 opens according to the flow rate calculated by the flow rate calculating section. By the controller 201 functioning as the open time period adjusting section, the amount of cleaning water used in analysis is maintained constant even when the temperature in analysis changes, so that degradation of the precision of analysis of the automatic analyzer is able to be suppressed.

Embodiments according to the present invention have been described. The present invention is not limited to the above embodiments and modifications may be made to components without departing from the gist of the invention. Further, a plurality of components disclosed in the above embodiments may be combined as appropriate. Furthermore, of all the components shown in the above embodiments, some components may be deleted.

List of Reference Signs

| | |
|---|---|
| 100: | automatic analyzer, |
| 101: | control section, |
| 102: | input section, |
| 103: | display section, |
| 104: | storage section, |
| 106: | rack, |
| 107: | dispensing section, |
| 108: | analyzing section, |
| 109: | incubator, |
| 110: | stirring section, |
| 200: | supplying section, |
| 201: | controller, |
| 202: | tank, |
| 203: | pump, |
| 204: | electromagnetic valve, |

| | |
|---|---|
| 205: | water amount adjusting section, |
| 206: | pipe, |
| 207: | power source, |
| 208: | temperature sensor, |
| 208-1: | space, |
| 209: | outside air hole, |
| 210-1 to 210-3: | area, |
| 1070: | rotation axis, |
| 1071: | arm, |
| 1072: | nozzle, |
| 1073: | cleaning bath, |
| 1081: | cleaning section, |
| 1082: | analysis cell, |
| 1100: | rotation axis, |
| 1101: | arm, |
| 1102: | stirring stick |
| 1103: | cleaning bath |

**Claims**

1. An automatic analyzer that analyzes a sample, comprising:

   a pipe in which a liquid flows,
   a temperature sensor that is located away from the pipe and measures a temperature of a space in which the pipe is installed, and
   a flow rate calculating section that calculates a flow rate of the liquid flowing in the pipe according to a reference flow rate as a flow rate previously measured at a reference temperature and a measured temperature output from the temperature sensor.

2. The automatic analyzer according to Claim 1,
   wherein the temperature sensor is located at a middle point between an outside air hole, through which an outside air is taken in, and a heat source.

3. The automatic analyzer according to Claim 1,
   wherein the flow rate calculating section calculates flow rate Q of the liquid flowing in the pipe as $Q = Q0 + C \cdot \Delta T$ when Q0 denotes the reference flow rate, $\Delta T$ denotes difference between the measured temperature and the reference temperature, and C denotes a correction coefficient.

4. The automatic analyzer according to Claim 1, further comprising:

   an amount-used estimating section that estimates an amount used of the liquid according to the flow rate calculated by the flow rate calculating section; and
   a remaining amount determining section that displays a warning of remaining amount insufficiency and stops an analysis if a remaining amount in a tank for storing the liquid is less than the amount used as estimated by the amount-used estimating section.

5. The automatic analyzer according to Claim 1,
   wherein the temperature sensor is installed in each of areas obtained by division with a partition wall.

6. The automatic analyzer according to Claim 1, further comprising:

   a pump that feeds the liquid;
   a power source that supplies electric power to the pump; and
   a power adjusting section that adjusts electric power supplied from the power source to the pump according to the flow rate calculated by the flow rate calculating section.

7. The automatic analyzer according to Claim 1, further comprising:

an electromagnetic valve installed on the pipe; and

an open time period adjusting section that adjusts an open time period as a time period for which the electromagnetic valve opens, according to the flow rate calculated by the flow rate calculating section.

# FIG. 1

# FIG. 2

(a)

(b)

# FIG. 3

```
              ┌─────────────┐
              │    START    │
              └─────────────┘
                     │
                     ▼
S301 ─┐    ┌──────────────────────────────┐
      └────│  RECEIVE REQUEST FOR ANALYSIS │
           └──────────────────────────────┘
                     │
                     ▼
S302 ─┐    ┌──────────────────────────────┐
      └────│  MEASURE TEMPERATURE OF SPACE │
           └──────────────────────────────┘
                     │
                     ▼
S303 ─┐    ┌──────────────────────────────┐
      └────│   READ REFERENCE TEMPERATURE  │
           └──────────────────────────────┘
                     │
                     ▼
S304 ─┐    ┌──────────────────────────────────────────┐
      └────│  CALCULATE FLOW RATE AT ANALYSIS FROM     │
           │  DIFFERENCE BETWEEN MEASURED              │
           │  TEMPERATURE AND REFERENCE TEMPERATURE    │
           └──────────────────────────────────────────┘
                     │
                     ▼
S305 ─┐    ┌──────────────────────────────────────────┐
      └────│  ESTIMATE AMOUNT USED OF CLEANING         │
           │  WATER FROM FLOW RATE AT ANALYSIS         │
           └──────────────────────────────────────────┘
                     │
                     ▼
S306 ─┐   ╱──────────────────────────────────╲   YES
      └──<  IS REMAINING AMOUNT IN TANK LESS   >──────┐
          ╲ THAN ESTIMATED AMOUNT USED?       ╱        │
           ╲────────────────────────────────╱         │
                     │ NO                              ▼
                     │              S307 ─┐  ┌──────────────────────┐
                     │                    └──│  WARNING OF REMAINING │
                     │                       │  AMOUNT INSUFFICIENCY │
                     │                       └──────────────────────┘
                     ▼                                 │
S308 ─┐    ┌──────────────────────┐                    │
      └────│  ANALYSIS AND CLEANING│                    │
           └──────────────────────┘                    │
                     │                                  │
                     ▼                                  │
S309 ─┐    ┌──────────────────────┐                    │
      └────│  UPDATE REMAINING     │                    │
           │  AMOUNT OF CLEANING   │                    │
           │  WATER                │                    │
           └──────────────────────┘                    │
                     │                                  │
                     ▼                                  │
              ┌─────────────┐                           │
              │     END     │◄──────────────────────────┘
              └─────────────┘
```

# FIG. 4

## FIG. 5

# FIG. 6

```
        ┌─────────────┐
        │    START    │
        └─────────────┘
               │
               ▼
S601 ──┌───────────────────────────────┐
       │   RECEIVE REQUEST FOR ANALYSIS │
       └───────────────────────────────┘
               │
               ▼
S602 ──┌───────────────────────────────┐
       │  MEASURE TEMPERATURE OF SPACE  │
       └───────────────────────────────┘
               │
               ▼
S603 ──┌───────────────────────────────┐
       │   READ REFERENCE TEMPERATURE   │
       └───────────────────────────────┘
               │
               ▼
S604 ──┌───────────────────────────────────────┐
       │  CALCULATE FLOW RATE AT ANALYSIS FROM   │
       │    DIFFERENCE BETWEEN MEASURED          │
       │ TEMPERATURE AND REFERENCE TEMPERATURE   │
       └───────────────────────────────────────┘
               │
               ▼
S605 ──┌───────────────────────────────┐
       │  ADJUST POWER TO PUMP ACCORDING │
       │     TO FLOW RATE AT ANALYSIS    │
       └───────────────────────────────┘
               │
               ▼
S606 ──┌───────────────────────────────┐
       │     ANALYSIS AND CLEANING       │
       └───────────────────────────────┘
               │
               ▼
S607 ──┌───────────────────────────────┐
       │   UPDATE REMAINING AMOUNT       │
       │     OF CLEANING WATER           │
       └───────────────────────────────┘
               │
               ▼
        ┌─────────────┐
        │     END     │
        └─────────────┘
```

## INTERNATIONAL SEARCH REPORT

| International application No. |
| --- |
| **PCT/JP2024/030939** |

| A. | CLASSIFICATION OF SUBJECT MATTER |
| --- | --- |

*G01N 35/00*(2006.01)i
FI:  G01N35/00 F

According to International Patent Classification (IPC) or to both national classification and IPC

| B. | FIELDS SEARCHED |
| --- | --- |

Minimum documentation searched (classification system followed by classification symbols)

G01N35/00-G01N35/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-26449 A (CANON MEDICAL SYSTEMS CORP.) 10 February 2022 (2022-02-10) paragraphs [0008]-[0009], [0034]-[0051], fig. 2, 4 | 1-3, 6 |
| Y | paragraphs [0008]-[0009], [0034]-[0051], fig. 2, 4 | 7 |
| A | paragraphs [0008]-[0009], [0034]-[0051], fig. 2, 4 | 4-5 |
| Y | JP 2009-31110 A (NIKKISO CO., LTD.) 12 February 2009 (2009-02-12) paragraphs [0026]-[0028], fig. 1 | 7 |
| A | JP 2004-270537 A (MINOLTA CO., LTD.) 30 September 2004 (2004-09-30) entire text, all drawings | 1-7 |
| A | JP 2008-203009 A (HITACHI HIGH-TECHNOLOGIES CORPORATION) 04 September 2008 (2008-09-04) entire text, all drawings | 1-7 |

| ✓ | Further documents are listed in the continuation of Box C. | ✓ | See patent family annex. |
| --- | --- | --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 October 2024** | **26 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/030939** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 4976161 A (PRZED POLONIJ ZAGRAN PLASTOMED) 11 December 1990 (1990-12-11)<br>entire text, all drawings | 1-7 |

Form PCT/ISA/210 (second sheet) (July 2022)

**INTERNATIONAL SEARCH REPORT**
Information on patent family members

International application No.

**PCT/JP2024/030939**

| Patent document cited in search report | | | Publication date (day/month/year) | Patent family member(s) | | | Publication date (day/month/year) |
|---|---|---|---|---|---|---|---|
| JP | 2022-26449 | A | 10 February 2022 | (Family: none) | | | |
| JP | 2009-31110 | A | 12 February 2009 | (Family: none) | | | |
| JP | 2004-270537 | A | 30 September 2004 | (Family: none) | | | |
| JP | 2008-203009 | A | 04 September 2008 | US | 2008/0213132 | A1 | |
| | | | | entire text, all drawings | | | |
| US | 4976161 | A | 11 December 1990 | EP | 337460 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019039731 A